# EUROPEAN PATENT APPLICATION

(11) **EP 3 456 184 A1**
(43) Date of publication of application: **20.03.2019**
(21) Application number: 18194396.0
(22) Date of filing: 14.09.2018
(51) Int. Cl.: A01K 1/02, A01K 1/03

(54) **DEVICE PROVIDED WITH A FIRST CAGE AND A SECOND CAGE FOR KEEPING RABBITS THEREIN, USE OF THE DEVICE FOR KEEPING RABBITS**

(30) Priority: 18.09.2017 NL 2019564
(71) Applicant: Fransen Gerrits B.V., 5469 EA Erp (NL)
(72) Inventor: FRANSEN, Huub, 5469 EA Erp (NL)
(74) Representative: Algemeen Octrooi- en Merkenbureau B.V.

(57) **Abstract**

Device provided with a first cage and a second cage which are configured for keeping rabbits therein, wherein, in a wall of the first cage, a passage is provided which is configured, during use, to provide young rabbits located in the first cage access to the second cage while blocking access to the second cage for a first doe which, during use, is located in the first cage. Use of the device for keeping rabbits.

## Description

According to a first aspect, the present invention relates to a device provided with a first cage and a second cage for keeping rabbits therein.

According to a second aspect, the present invention relates to the use of the device according to the first aspect for keeping rabbits.

A known device for keeping rabbits is provided with a first cage for keeping a first doe therein and a second cage for keeping a second doe therein. Such a cage may be configured as a hutch for keeping a doe and is provided with mesh all around and a bottom plate for providing a dwelling space for the doe. Alternatively, such a cage may be configured as a nesting box for young rabbits, wherein the nesting box is accessible to a doe, wherein an adjacent hutch is provided for the benefit of the doe. In the context of the present invention, the term doe is understood to mean an adult female rabbit. The young rabbits to be fed by the doe are in this case held in the cage, with the doe. In the context of the present invention, the term young rabbit is understood to mean a rabbit of an age in the range from 0 - 5 weeks. A drawback of this known device is that it can be improved with regard to improving the welfare of the young rabbits and reducing the mortality and/or morbidity of young rabbits when using the device.

It is therefore an object of the present invention to provide a device which has been improved with regard to the welfare of the young rabbits and for reducing the mortality and/or morbidity of young rabbits when using the device.

This object is achieved by the fact that the device according to the present invention, in a wall of the first cage, is provided with a passage which is configured, during use, to provide young rabbits located in the first cage access to the second cage while blocking access to the second cage for a first doe which, during use, is located in the first cage. By providing this passage, the young rabbits are free to move to the second cage in order to thus allow the young rabbits to form groups with the young rabbits which, during use, are located in the second cage. Allowing the young rabbits to form groups is advantageous in order to stimulate the natural behaviour of the young rabbits, as a result of which the welfare of the young rabbits improves and mortality and/or morbidity of young rabbits is reduced. Blocking the access to the second cage for a first doe which, during use, is located in the first cage, prevents the first doe from attacking a doe which is located in the second cage. Preferably, the first cage and the second cage are neighbouring cages in which the passage is provided in a wall separating the first cage and the second cage.

Preferably, the device is provided with at least three neighbouring cages which each form a cage for keeping rabbits, wherein in a wall of each of the respective neighbouring cages, a passage is formed for providing access to a neighbouring cage for the young rabbits while blocking access to a neighbouring cage for does. This is advantageous in order to allow relatively large groups of young rabbits to form so as to stimulate the natural behaviour of the young rabbits as a result of which the welfare of the young rabbits improves and mortality and/or morbidity of young rabbits is reduced. In a practical embodiment, the device comprises 50 to 100 neighbouring cages, wherein in each case the dwelling spaces of at least four neighbouring cages are accessible to the young rabbits via said passages in the wall.

An additional advantage of the device according to the present invention is the fact that the young rabbits to be fed can feed from various does. This is advantageous if the first doe is unable or not sufficiently able to feed the young rabbits, for example due to an inflamed udder. By providing the passage, the young rabbits are able to feed from a doe which, during use, is located in the second cage, as a result of which the mortality and/or morbidity of young rabbits is reduced.

A further additional advantage of the device according to the present invention is that, by stimulating a more natural behaviour and group formation, the young rabbits are less prone to disease, separate more easily from the mother during weaning and grow more quickly.

It should be noted that, in the context of the present invention, the terms mortality and/or morbidity of young rabbits include the death or illness of young rabbits.

In this case, it is advantageous if a surface of the passage is in the range of 20 - 50 cm², more preferably in the range of 25 - 36 cm². A surface in this range is advantageous in order to provide a relatively easy passage for young rabbits while blocking access to the second cage for the first doe in a relatively reliable way. In this case, it is advantageous if the wall is formed by a mesh in order to form the passage by providing an opening in the mesh by removing one or more mesh portions. In an embodiment of the device, the passage is rectangular, square or round. With a square passage, it is advantageous if the dimensions of the passage are 5 x 5 cm, 6 x 6 cm or 7 x 7 cm. It has been found that such dimensions make it possible to achieve reliable blocking of the doe. The dimensions of 7 x 7 cm are advantageous in order to provide a passage for relatively large young rabbits.

It is advantageous if an edge of the wall surrounding the passage is provided with a protective unit in order to protect the young rabbits against injuries. This is advantageous in order to reduce mortality and/or morbidity of young rabbits due to injuries sustained on the edge of the wall surrounding the passage. In an embodiment in which the wall is formed by mesh, it is advantageous if the protective unit is formed by processing the mesh, as a result of which the edge of the wall surrounding the passage is rounded or at least the sharp parts are removed. Preferably, the protective unit comprises a rounded strip of material in order to provide a rounded edge at the location of the edge.

In a practical embodiment of the device, a distance between a bottom surface of the first cage and the passage is in the range of 3 - 10 cm, preferably in the range of 4 - 5 cm. This is advantageous in order to select the young rabbits which may proceed from the first cage into the second cage. By providing a distance, a threshold is formed. This threshold can only be overcome by young rabbits which have reached a certain stage of development. This is advantageous in order to prevent young rabbits which have not reached this specific stage of development from passing from the first cage to the second cage, or at least to reduce the number thereof. It is known that newborn young rabbits cannot move by walking. Once the young rabbits are able to walk, they reach a stage of development in which they can overcome obstacles, such as for example a threshold. By providing the abovementioned threshold, young rabbits which are able to walk, but have not yet reached a stage of development such that they can overcome a threshold in the range of 3 - 10 cm are prevented from passing through the passage for reaching the second cage.

Preferably, the device is provided with a third cage for keeping rabbits therein, wherein one of the first cage and the third cage is formed as a nesting box in order to provide a nesting space for the young rabbits, with the other of the first cage and the third cage being formed as a hutch in order to provide a dwelling space for the first doe. Providing a nesting box is advantageous in order to stimulate the natural behaviour of the young rabbits, as a result of which the welfare of the young rabbits improves and mortality and/or morbidity of young rabbits is reduced. The young rabbits can stay in the nest, just like young rabbits in nature.

In this case, it is advantageous if the device is provided with a blocking unit in order to, in a first position of the blocking unit, block access to the first cage from the third cage for rabbits which, during use, are located in the third cage and block access to the third cage from the first cage for rabbits which, during use, are located in the first cage and, in a second position of the blocking unit, give access to the first cage from the third cage for rabbits which, during use, are located in the third cage and give access to the third cage from the first cage for rabbits which, during use, are located in the first cage. The blocking unit is advantageous in order to, at least partly, imitate a natural habitat.

In this case, it is advantageous if the blocking unit is provided with a further passage for, in the first position of the blocking unit, providing access to the first cage from the third cage for young rabbits which, during use, are located in the third cage and providing access to the third cage from the first cage for young rabbits which, during use, are located in the first cage, the further passage blocking the passage for the first doe. This is advantageous for the young rabbits to be able to move freely between the third cage, the first cage and, via the passage, with the second cage in order to enable the young rabbits to form groups with the young rabbits which, during use, are located in the second cage. Enabling the young rabbits to form groups is advantageous in order to stimulate the natural behaviour of the young rabbits, thus improving the welfare of the young rabbits and reducing mortality and/or morbidity of young rabbits.

In this case, it is advantageous if a surface of the further passage is in the range of 20 - 50 cm², more preferably in the range of 25 - 36 cm². A surface of the further passage in this range is advantageous in order to provide a relatively easy passage for young rabbits while blocking access to the nesting box for the first doe in a relatively reliable way. In this case, it is advantageous if the wall is formed by a mesh in order to form the passage by providing an opening in the mesh by removing one or more mesh portions. In an embodiment of the device, the passage is rectangular, square or round. With a square passage, it is advantageous if the dimensions of the passage are 5 x 5 cm, 6 x 6 cm or 7 x 7 cm. It has been found that such dimensions make it possible to achieve reliable blocking of the doe. The dimensions of 7 x 7 cm are advantageous in order to provide a passage for relatively large young rabbits.

It is advantageous if an edge of the blocking unit surrounding the further passage is provided with a further protective unit in order to protect the young rabbits against injuries. This is advantageous in order to reduce mortality and/or morbidity of young rabbits due to injuries sustained on the edge of the blocking unit surrounding the further passage. In an embodiment in which the blocking unit is formed by mesh, it is advantageous if the further protective unit is formed by processing the mesh, as a result of which the edge of the blocking unit surrounding the further passage is rounded or at least the sharp parts are removed. Preferably, the further protective unit comprises a rounded strip of material in order to provide a rounded edge at the location of the edge.

In a practical embodiment of the device, it is advantageous if the nesting box is provided with a feeding unit in order to provide feed to the young rabbits located in the nesting box. This is advantageous in order to be able to offer feed to the young rabbits which differs from the feed offered to the doe. As a result thereof, it is possible to provide the young rabbits with feed which is advantageous for the development of the young rabbits and to regulate the feed ration of the doe more efficiently due to the fact that the young rabbits no longer eat the feed which is intended for the doe, or at least eat less of it.

In this case, it is advantageous if the feeding unit comprises a release element which is configured to prevent a young rabbit of the young rabbits from blocking access to the feed for the other young rabbits. Preferably, the release element is incorporated in a feeder in order to prevent a young rabbit from laying down in the feeder and thus blocking access to the feed in the feeding unit. In a practical embodiment of the release element, the release element comprises a partition element for partitioning the feeder into parts of a size which is such that a young rabbit is prevented from laying in the feeder.

It is advantageous if a feeder of the feeding unit is configured to prevent a doe from taking the feed from the feeding unit. As the head of a doe is larger than the head of a young rabbit, it is possible, by reducing the dimensions of the feeder of the feeding unit, that the young rabbits are able to take feed located in the feeding unit, while a doe is prevented from taking feed located in the feeder, or the possibility is at least greatly reduced.

Preferably, the hutch is provided with a further feeding unit in order to provide feed to a doe which, during use, is located in the dwelling space of the hutch. This is advantageous in order to be able to offer feed to a first doe which is present in the dwelling space.

In this case, it is advantageous if the device is provided with a feed-supplying unit in order to supply feed to the further feeding unit. This is advantageous in order to provide a relatively reliable supply of feed to the does. In an embodiment, the feed-supplying unit is configured to supply a predetermined amount of feed to the further feeding unit. This is advantageous in order to ration the feed for a doe.

It is advantageous if the device is provided with a stand-up cage in order to provide a stand-up space for the first doe and a protective unit in order to, in a first position of the protective unit, block access to the stand-up cage for the first doe which, during use, is located in the first cage or the third cage and, in a second position of the protective unit, give access to the stand-up cage for the first doe which, during use, is located in the first cage or the third cage. A stand-up cage is advantageous for improving the welfare of the first doe due to the fact that the doe can stand on its hind legs in the stand-up space and can thus stand up to full height. Preferably, the stand-up cage is provided with a bottom part on a bottom side to form a reclining space for the first doe. This is advantageous in order to provide a resting area for the first doe, in which the doe can be screened off from the young rabbits by the protective unit.

Preferably, the passage is configured to provide young rabbits located in the second cage access to the first cage while blocking access to the first cage for a second doe which is located in the second cage. By giving access to the first cage, the young rabbits located in the second cage can move freely to the first cage in order to thus enable the young rabbits to form groups with young rabbits which, during use, are located in the first cage. Allowing group formation for the young rabbits is advantageous in order to stimulate the natural behaviour of the young rabbits, thus improving the welfare of the young rabbits and reducing mortality and/or morbidity of the young rabbits.

According to a second aspect, the present invention relates to the use of the device according to the first aspect of the present invention in keeping rabbits. The advantages of using the device are analogous to the advantages of the device according to the first aspect.

The present invention will be explained in more detail below by means of the description of preferred embodiments of a device according to the invention with reference to the following diagrammatic figures, in which:

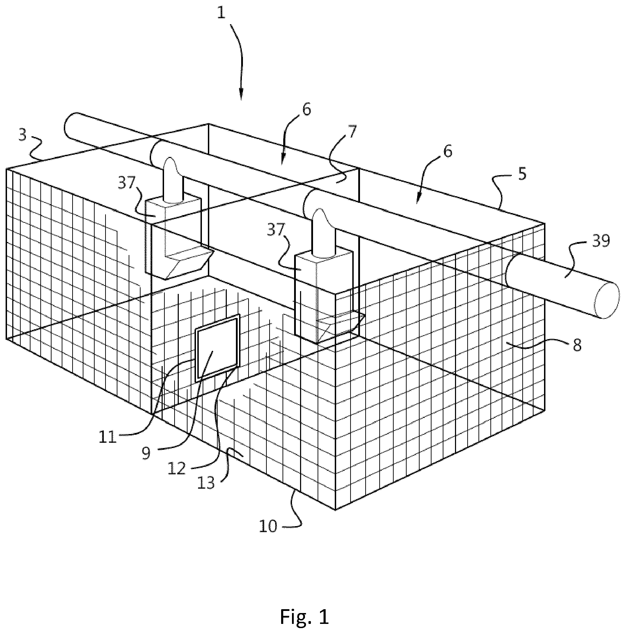

Fig. 1 shows an isometric view of a device according to the present invention;
Fig. 2 shows an isometric view of a device according to the present invention;
Fig. 3 shows the device according to Fig. 2 in cross section A-A;
Fig. 4 shows the device according to Fig. 2 in cross section B-B;

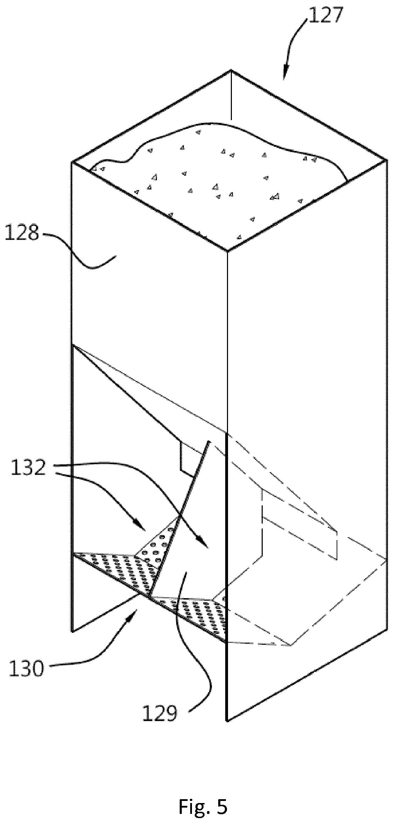

Fig. 5 shows an isometric view of a feeding unit of the device according to Fig. 2.

Device 1 is provided with two neighbouring cages, a first cage 3 and a second cage 5. The two neighbouring cages 3 and 5 each form a dwelling space 6 for a doe. The dwelling space 6 is surrounded by mesh 8 on all sides and has a height of 26 cm, a width of 38 cm and a depth of 72 cm. On its bottom side, the dwelling space 6 is delimited by a bottom plate 10. The bottom plate 10 preferably comprises a plastic. In a wall 7 of the first cage 3, a passage 9 is present in the mesh 8. The passage 9 has been formed by removing a number of bars from the mesh 8. The dimensions of the passage 9 are 7 x 7 cm. At the edge 12 surrounding the passage 9, the mesh 8 is provided with a plastic strip 11 in order to form a protective unit to prevent the young rabbits from injuring themselves on the mesh 8. On its bottom side, the passage 9 is located at a distance of 4 cm from the side 13 of the bottom plate 10 facing the dwelling space 6. The device 1 is provided with a feed-supplying unit 39 for supplying feed to a further feeding unit 37.

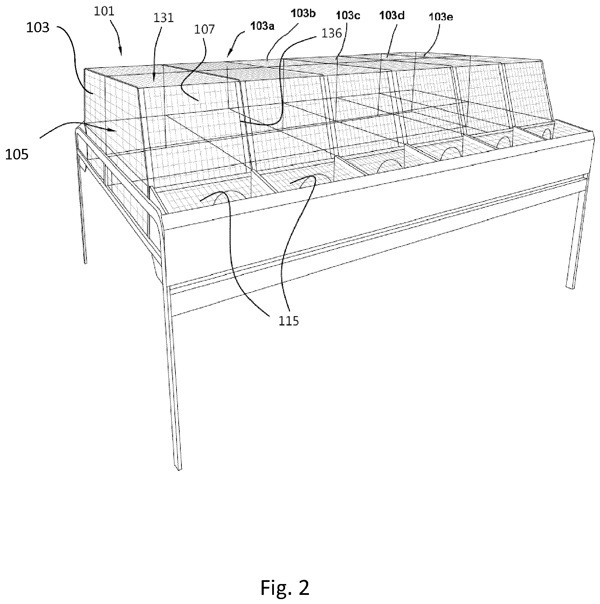

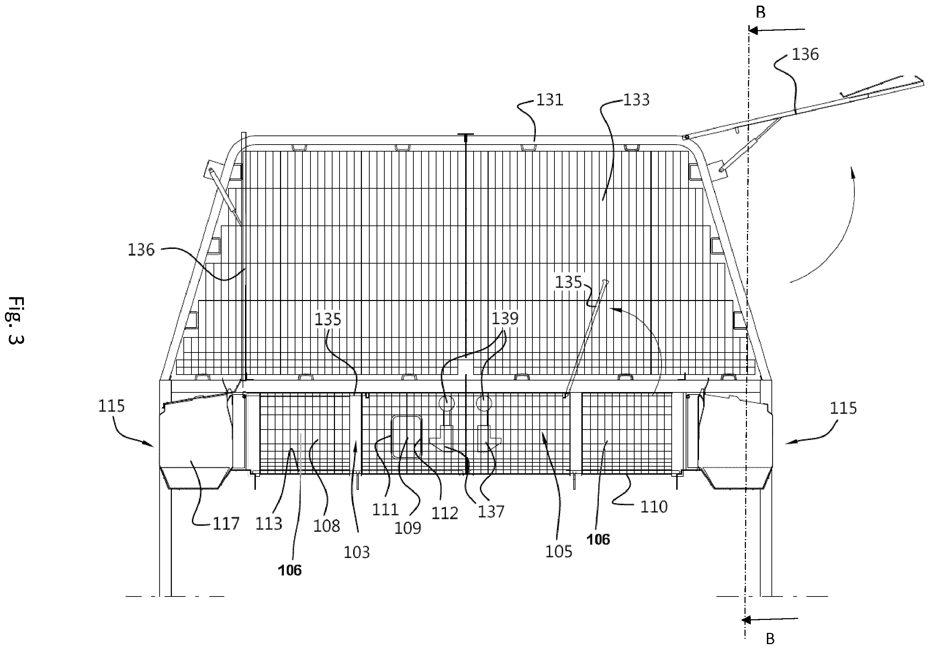

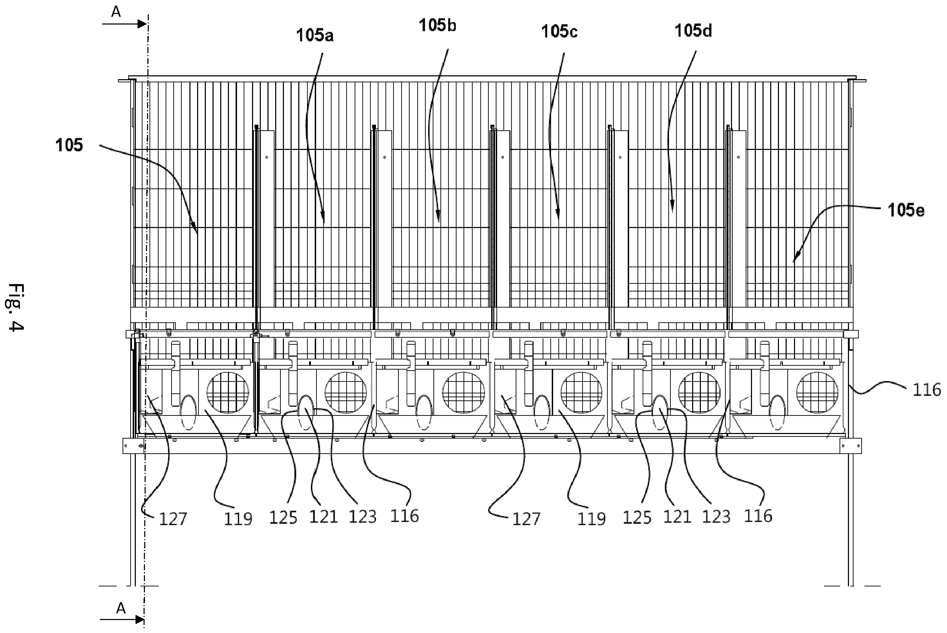

The device 101 illustrated in Figs. 2 - 4 comprises a first cage 103, a second cage 105 and further cages 103a, 103b, 103c, 103d, 103e 105a, 105b, 105c, 105d and 105e. The first cage 103, the second cage 105 and further cages 103a, 103b, 103c, 103d, 103e, 105a, 105b, 105c, 105d and 105e are configured as hutches and each form a dwelling space 106 for a doe. The dwelling space 106 is surrounded by mesh 108 on all sides and has a height of 26 cm, a width of 38 cm and a depth of 72 cm. On the bottom side, the dwelling space 106 is delimited by a bottom plate 110. The bottom plate 110 preferably comprises a plastic. In a wall 107 of the first cage 103, the second cage 105 and further cages 103a, 103b, 103c, 103d, 103e, 105a, 105b, 105c, 105d and 105e, a passage 109 is present in the mesh 108. Of these passages 109, only the passage 109 in the wall 107 between the first cage 103 and the further cage 103a is shown in Fig. 2. The passage 109 is formed by removing a number of bars from the mesh 108. The dimensions of the passage 109 are 7 x 7 cm. On the edge 112 surrounding the passage 109, the mesh 109 is provided with a plastic strip 111 in order to form a protective unit to prevent the young rabbits from injuring themselves on the mesh 108. On its bottom side, the passage 109 is located at a distance of 4 cm from the side 113 of the bottom plate 110 facing the dwelling space 106. The first cage 103, the second cage 105 and further cages 103a, 103b, 103c, 103d, 103e, 105a, 105b, 105c, 105d and 105e are each provided with a further feeding unit 137. The further feeding unit 137 is configured in such a way that a doe which is located in the dwelling space 106 of a respective cage can take feed from the further feeding unit 137. The device 101 is provided with a feed-supplying unit 139 for supplying feed to the further feeding units 137.

Stand-up cages 131 are provided above the dwelling space 106 of the first cage 103, the second cage 105 and further cages 103a, 103b, 103c, 103d, 103e, 105a, 105b, 105c, 105d and 105e. The stand-up cages 131 form a stand-up space 133 which is accessible for a doe via a protective unit formed as a hingeable flap 135 if the hingeable flap 135 is in a second position, in which the flap hinges in the stand-up cage 131. The stand-up cages 131 have a height of 83 cm, so that the doe can stand up in the stand-up space 133, in which case the doe stands on its hind legs. On a longitidunal side, the stand-up cages 131 are provided with a hingeable door 136 to provide a carer of the rabbits with access to the stand-up space 133 and the first cage 103, the second cage 105 and further cages 103a, 103b, 103c, 103d, 103e, 105a, 105b, 105c, 105d and 105e when the hingeable flap 135 is in the second position. In the first position of the hingeable flap 135, the flap 135 is substantially in a horizontal position, in which the flap 135 blocks access from the first cage 103, the second cage 105 and further cages 103a, 103b, 103c, 103d, 103e, 105a, 105b, 105c, 105d and 105e to the stand-up space 133.

On a side of the first cage 103, the second cage 105 and further cages 103a, 103b, 103c, 103d, 103e, 105a, 105b, 105c, 105d and 105e, third cages in the form of nesting boxes 115 are provided. The nesting boxes 115 provide a nesting space 117 for forming a nest for the young rabbits and are provided, on a side wall, with a plate part 116 in order to provide a sheltered nesting space 117. A blocking unit in the form of a slideable element 119 is provided in order to separate the nesting space 117 from the dwelling space 106. The slideable element 119 is provided with an aperture for forming a further passage 121 for the young rabbits. In a first position of the slideable element 119, the slideable element 119 blocks access to the nesting space 117 for the doe. In this case, the slideable element 119 forms a part of the wall of the first cage 103 which surrounds the dwelling space 106, in which case the surface of the aperture in the wall for providing the further passage 121 is too small for a doe to pass into the nesting box 115. In a second position of the slideable element 119, an opening is unblocked in the wall separating the nesting space 117 from the dwelling space 106 which is sufficiently large to allow the doe into the nesting box 115. On the edge 123 surrounding the further passage 121, the slideable element 119 is provided with a plastic strip 125 in order to form a further protective unit to prevent the young rabbits from injuring themselves on the slideable element 119.

The nesting boxes 115 are each provided with a feeding unit 127 for providing feed to the young rabbits in the nesting space 117. The feeding unit 127 is provided with a reservoir 128 for holding granular feed. During use of the device, feed located in the reservoir 128 is not accessible for young rabbits in the nesting boxes 115. On a bottom side, a reservoir wall surrounding the reservoir 128 is provided with perforations in order to allow dust in the reservoir 128 to pass through. The perforations have a diameter of 4 mm. In an embodiment, it is conceivable for the perforations to have a diameter in the range of 3 - 4 mm. The feeding unit 127 is furthermore provided with a feeder 130 in order to make feed available to the young rabbits. In the feeder 130, a release element in the form of a substantially vertical wall 129 is provided. The substantially vertical wall 129 divides the feeder 130 into compartments 132 in such a way that a young rabbit will not lay in the feeder 130, or at least only for a relatively short period, and thus block access to the feed for the other young rabbits. The dimensions of the access opening to a compartment are 7 x 8 cm.

A device (not shown in any more detail) according to the first aspect of the present invention differs from the device 101 in that the passage is provided in a wall of a nesting box in order to provide access to a neighbouring nesting box for young rabbits located in the nesting box while blocking access to the neighbouring nesting box for a first doe which, during use, is located in the nesting box.

The device 101 can be used as follows for keeping rabbits. A first doe is placed in the dwelling space 106 of the first cage 103. The slideable element 119 is placed in the second position, so that the first doe can nest in the nesting box 115 and can drop the young rabbits in the nesting box 115. After dropping, preferably 2 to 5 days after dropping, the slideable element 119 is placed in the first position in order to block access to the nesting space 117 for the first doe. The slideable element 119 is then placed into the second position at least once a day, so that the first doe can enter the nesting space 117 in order to feed the young rabbits. Once the young rabbits can independently enter the dwelling space 106 of the first cage 103 from the nesting space 117 via the further passage 121, it is no longer necessary to place the slideable element 119 into the second position at least once a day and the feeding unit 127 is fitted in the nesting box 115, so that the young rabbits can also eat granular feed, in addition to the milk from the first doe. Once the young rabbits have reached a certain stage of development, they can pass through the passage 109 independently in order to enter the dwelling space of a second cage 105. From the second cage 105, the young rabbits can then reach the dwelling spaces 106 of the further cages 103a and 105a by means of the passages 109.

## Claims

1. Device (1, 101) provided with a first cage (3, 103) and a second cage (5, 105) which are configured to keep rabbits therein, wherein, in a wall (7, 107) of the first cage (3, 103), a passage (9, 109) is provided which is configured, during use, to provide young rabbits located in the first cage (3, 103) access to the second cage (5, 105) while blocking access to the second cage (5, 105) for a first doe which, during use, is located in the first cage (3, 103).

2. Device (1, 101) according to Claim 1, wherein a surface of the passage (9, 109) is in the range of 20 - 50 cm², more preferably in the range of 25 - 36 cm².

3. Device (1, 101) according to Claim 1 or 2, wherein an edge of the wall (7, 107) surrounding the passage (9, 109) is provided with a protective unit (11, 111) in order to protect the young rabbits against injuries.

4. Device (1, 101) according to one of the preceding claims, wherein a distance between a bottom surface (13, 113) of the first cage (3, 103) and the passage (9, 109) is in the range of 3 - 10 cm, preferably in the range of 4 - 5 cm.

5. Device (101) according to one of the preceding claims, wherein the device (101) is provided with a third cage (115) for keeping rabbits therein, wherein one of the first cage (103) and the third cage (115) is formed as a nesting box in order to provide a nesting space (117) for the young rabbits, with the other of the first cage (103) and the third cage (115) being formed as a hutch in order to provide a dwelling space (106) for the first doe.

6. Device (101) according to Claim 5, wherein the device is provided with a blocking unit (119) in order to, in a first position of the blocking unit (119), block access to the first cage (103) from the third cage (115) for rabbits which, during use, are located in the third cage (115) and block access to the third cage (115) from the first cage (103) for rabbits which, during use, are located in the first cage (103) and, in a second position of the blocking unit (119), give access to the first cage (103) from the third cage (115) for rabbits which, during use, are located in the third cage (115) and give access to the third cage (115) from the first cage (103) for rabbits which, during use, are located in the first cage (103).

7. Device (101) according to Claim 6, wherein the blocking unit (119) is provided with a further passage (121) for, in the first position of the blocking unit (119), providing access to the first cage (103) from the third cage (115) for young rabbits which, during use, are located in the third cage (115) and providing access to the third cage (115) from the first cage (103) for young rabbits which, during use, are located in the first cage (103), the further passage (121) blocking the passage for the first doe.

8. Device (101) according to Claim 7, wherein a surface of the further passage (121) is in the range of 20 - 50 cm², more preferably in the range of 25 - 36 cm².

9. Device (101) according to Claim 7 or 8, wherein an edge (123) of the blocking unit (119) surrounding the further passage (121) is provided with a further protective unit (125) in order to protect the young rabbits against injuries.

10. Device (101) according to one of Claims 5 to 9, wherein the nesting box (115) is provided with a feeding unit (127) in order to provide feed to the young rabbits located in the nesting box (115).

11. Device (101) according to Claim 10, wherein the feeding unit (127) comprises a release element (129) which is configured to prevent a young rabbit of the young rabbits from blocking access to the feed for the other young rabbits.

12. Device (1, 101) according to one of Claims 5 to 11, wherein the hutch is provided with a further feeding unit (37, 137) in order to provide feed to a first doe which, during use, is located in the dwelling space (6, 106) of the hutch.

13. Device (1, 101) according to Claim 12, wherein the device (1, 101) is provided with a feed-supplying unit (39, 139) in order to supply feed to the further feeding unit (37, 137).

14. Device (101) according to one of Claims 5 to 13, wherein the device (101) is provided with a stand-up cage (131) in order to provide a stand-up space (133) for the first doe and a protective unit (135) in order to, in a first position of the protective unit (135), block access to the stand-up cage (131) for the first doe which, during use, is located in the first cage (103) or third cage (115) and, in a second position of the protective unit (135), give access to the stand-up cage (131) for the first doe which, during use, is located in the first cage (103) or third cage (115).

15. Device (1, 101) according to one of the preceding claims, wherein the passage (9, 109) is configured to provide young rabbits located in the second cage (5, 105) access to the first cage (3, 103) while blocking access to the first cage (3, 103) for a second doe which is located in the second cage (5, 105).
